# EUROPEAN PATENT APPLICATION

(11) **EP 4 302 977 A1**
(43) Date of publication of application: **10.01.2024**
(21) Application number: 23382701.3
(22) Date of filing: 07.07.2023
(51) Int. Cl.: B29C 73/16, C08L 83/04

(54) **SELF-HEALING CONDUCTIVE MATERIAL**

(30) Priority: 07.07.2022 ES 202230621
(71) Applicant: Universidad Carlos III de Madrid, 28919 Leganés - Madrid (ES)
(72) Inventor: García González, Daniel, Leganés (ES); López Donaire, María Luisa, Leganés (ES); Arias Hernández, Ángel, Leganés (ES); Mejías Fernández, Alejandro, Leganés (ES)
(74) Representative: Pons

(57) **Abstract**

The present invention relates to a new material capable of self-healing without requiring external energy sources, comprising an elastomeric adhesive matrix filled with particles having strong magnetization, in other words, high magnetic coercivity. When said material is broken into two or more parts and these parts are again moved closer to one another, the magnetic particles interact with one another, healing said crack. Furthermore, this material can be doped with conductive nanoparticles such that the structure allows the self-healing of the material, as well as providing dependence between the electrical resistance and the strain of the material.

## Description

The present invention relates to a new material capable of self-healing without requiring external energy sources, comprising an elastomeric adhesive matrix filled with particles having strong magnetization, in other words, high magnetic coercivity. When said material is broken into two or more parts and these parts are again moved closer to one another, the magnetic particles interact with one another, healing said crack. Furthermore, this material can be doped with conductive nanoparticles such that the structure allows the self-healing of the material, as well as providing dependence between the electrical resistance and the strain of the material.

### BACKGROUND OF THE INVENTION

The so-called "materials with self-healing (SH) effect" have been developed. These materials have the ability to heal after being subjected to mechanical rupture, partially recovering their structural integrity. SH materials can be classified into extrinsic or intrinsic according to the curing mechanism. Extrinsic SH materials are usually based on the encapsulation of healing agents within microcapsules or vascular networks. Intrinsic SH materials have an inherent healing mechanism based on physicochemical interactions or on dynamic covalent chemical bonds. Some more sophisticated solutions allow autonomous healing in environmental conditions by means of reversible polymeric chain formation. However, the self-healing response of SH materials usually requires a long time. When dynamic responses of this material are required, the effects of SH materials can be accelerated using different external energy sources such as light, heat, or pressure. The limitation of these materials is the need of an external stimulation which compromises its autonomy.

The need of external stimuli complicates the application of SH materials particularly when they are located in closed spaces. Therefore, they are limited by different variables such as the penetration depth of the light or the specific thermal conditions derived from the environment or its surrounding such as, for example, an unwanted heat source in the vicinity of the material. An alternative to partially stop these bottlenecks would consist of incorporating magnetic particles that would fill the matrix, such that a magnetic field can be used to induce heat by means of dissipation mechanisms. The external stimulus would consist of a remotely-controlled alternating magnetic field. Furthermore, this solution offers extremely useful opportunities for bioengineering applications, due to the low magnetic permeability of biological tissues, which allow their actuation without disrupting said field. Moreover, polymers with magnetic particles present significant amount of multifunctional responses related to a magneto-mechanical coupling such as, for example, magnetorheological elastomers (MREs) that are capable of mechanically deforming or even changing their mechanical properties (i.e., stiffness) when subjected to an external magnetic stimulus. Taking advantage of these applications, recent works propose novel MREs that respond to magnetic stimuli by changing their shape or their stiffness; or even accelerating their curing process by means of heat induction.

Another possibility for using these MREs as SH materials consists of taking advantage of the interactions between their particles to create bonding between broken compounds. Following this idea, [Cerdan et al. 2020. A novel approach for the closure of large damage in self-healing elastomers using magnetic particles. Polymer 204, 122819] developed elastomers which incorporate magnetite particles. If a magnetic field was moved closer to the damaged region after rupture, the magnetic particles interacted through dipole-dipole interaction, closing the crack. However, after removing said field, the effect thereof wore off. The latter represents an important limitation as it requires the constant presence of a magnetic field which, in many cases, can be an invasive solution. Therefore, all the obstacles for obtaining suitable SH materials without requiring external sources to activate the healing mechanism, preventing the possibility of self-healing thereof, while subjecting the SH materials to an indefinite number of cyclic repairs, have not been overcome at present.

### DESCRIPTION OF THE INVENTION

In a first aspect, the present invention relates to a self-healable material characterized in that it comprises
- an elastomeric adhesive matrix with a service temperature stiffness comprised between 0.5 kPa and 12 kPa, considering a service temperature interval of between 5°C and 50°C; and
- a plurality of magnetic particles with at least 150 mT of residual magnetization, wherein said particles are homogeneously distributed throughout the entire volume of the elastomeric adhesive matrix, have a particle size of between 5 µm and 55 µm, and wherein the volume ratio of said magnetic particles with respect to the total material is between 8% and 32%.

This self-healable material results from two main contributions: the interactions between magnetic particles and the adhesive forces of the elastomeric matrix, and the response of which is independent of the self-healing cycles to which it is subjected. On one hand, it has the advantage that the permanent magnetization of the magnetized samples induces internal stresses that causes material stiffening. This indicates that the magnetic force is what contributes to self-healing. This hardening increases as the particle volume present in the matrix increases, showing an increase in Young's modulus up to 4.5 times greater without any significant differences observed in stress at failure. Furthermore, once rupture occurs, both broken parts act as magnets attracting each other and generating a force which allows healing the rupture. Said effect is reproduced in already healed materials, such that the healed material tends to withstand higher stresses than virgin specimens and stress values very close to those withstood by the magnetized samples. The stiffness of the healed material is almost equivalent to the magnetized material and significantly greater than the non-magnetized material, suggesting that the structural integrity at failure is partially provided by the magnetic component of the stress. Furthermore, on the other hand, it contributes the component generated by the adhesive nature of the elastomeric matrix.

In the present invention, stiffness is understood to mean the value of the shear modulus of the material, which can be obtained by means of conventional uniaxial tensile tests, rheological tests, indentation test, or other tests.

In the present invention, "particle size" is understood to mean the mean diameter of the particles measured as D₅₀, wherein D₅₀ means a cumulative point of 50% of the diameter or is also referred to as mean particle size or mean diameter. Particle size distribution can be measured by means of standard techniques, such as laser diffraction or dynamic light scattering using, for example, a Microtrac sra9200 laser analyzer for measuring in the order of micrometers on Nanotrac Flex for measuring in the order of nanometers. In addition, nanometric scale conductive particles (carbon black) are also analyzed both in terms of their morphology and size in dry state by means of transmission electron microscopy (TEM) and the corresponding statistical image analysis, following the ASTM D3849 standard.

In a preferred embodiment of the self-healable material, the elastomeric adhesive matrix is formed by an elastomer material selected from polysiloxane, two-phase polysiloxane, polydimethylsiloxane, polyvinyl siloxane, vinylmethylsiloxane-dimethylsiloxane copolymers, and any combination thereof.

In a more preferred embodiment of the self-healable material, the material of the elastomeric adhesive matrix is polyvinyl siloxane.

In another preferred embodiment of the self-healable material, the magnetic particles are selected from NdFeB, SmCo, BaFeO particles and any combination thereof. In a more preferred embodiment of the self-healable material, the magnetic particles are NdFeB particles. This NdFeB exhibits suitable permanent magnetization and is in a magnetic powder state.

Another aspect of the invention relates to the self-healable conductive material characterized in that it comprises
- the self-healable material described above; and
- conductive particles, wherein said particles are homogeneously distributed throughout the entire volume of the elastomeric adhesive matrix, have a particle size of between 10 nm and 50nm, and wherein the volume ratio of said particles with respect to the total conductive composite material is between 8% and 15%.

This self-healable conductive material exhibits the following advantages due to the fact that the electrical resistance increases continuously with the strain of the material until rupture, at which time it changes abruptly adopting infinite values. The material exhibits self-healing through mechanical and magnetic means, as described previously in the self-healable material, and additionally self-healing by fully recovering its electrical properties. Therefore, the self-healable conductive material does not limit the use of the material to a single time, and the number of healing cycles is unlimited, as long as the magnetic particles are not subjected to demagnetization.

In a preferred embodiment of the self-healable conductive material, the conductive particles are selected from carbon nanoparticles of up to 300 nm, silver nanoparticles, copper nanoparticles, gold nanoparticles, and any combination thereof. In a more preferred embodiment, the conductive particles are carbon nanoparticles of up to 300 nm.

In a preferred embodiment of the self-healable conductive material, the volume ratio of the conductive particles with respect to the total conductive material is 10%. With said ratio the material reaches optimum elastomeric adhesive matrix polymerization and conductivity values.

Another aspect of the invention relates to the method for obtaining the self-healable material described above, characterized in that it comprises the following steps:
a) preheating an elastomer material at a temperature of between 70°C and 80°C for at least 2 min and mixing with the magnetic particles in a particle volume ratio with respect to the total material of between 8% and 32%;
b) pouring the mixture obtained in (a) in a mold and performing degasification;
c) curing the degasified mixture obtained in (b) at a temperature of between 90°C and 100°C for a time of between 90 min and 24 hours;
d) permanently magnetizing the material obtained in c) by means of using an impulse magnetizer and removing from the mold.

In a preferred embodiment of the method for obtaining the self-healable material, mixing of the two components of the elastomer material in a volume ratio of between 5:6 and 6:5 is performed before step a) if the elastomer material is a two-phase polyvinyl siloxane.

In another preferred embodiment of the method, the mold in step (b) is an ABS mold.

In another preferred embodiment of the method for obtaining the self-healable material, the mold has the specific geometry of the component to be manufactured which is selected from slender rectangular structures with thicknesses between 1 mm and 3 mm, slender cylindrical structures with sections of between 1 mm and 3 mm in diameter and flat structures with complex geometries with thicknesses between 1 mm and 3 mm.

Another aspect of the invention relates the method for obtaining the self-healable conductive material described above, characterized in that it comprises the following steps:
i. Mixing an elastomer material with conductive particles in a particle volume ratio with respect to the total material of between 8% and 15%;
ii. adding magnetic particles to the mixture obtained in (i) in a volume ratio of between 8% and 32% and mixing until homogenization;
iii. removing particle aggregates from the mixture obtained in (ii) and adding into a mold;
iv. degasifying the mixture in the mold obtained in (iii) for at least 20 min;
v. heating the degasified mixture in the mold obtained in (iv) at a temperature of between 90 and 100°C for a time of between 90 min and 24 h; and
vi. permanently magnetizing the material obtained in (v) by means of using an impulse magnetizer and removing from the mold.

In a preferred embodiment of the method for obtaining the self-healable conductive material, the mixing of step (i) is first performed manually and then mechanically with a technique selected from mixing and passage into conical tipped syringe; or
the mixing performed in step (i) is carried out by introducing the elastomer material with the conductive particles in a 3D printing device and performing the printing of these materials. This would eliminate the need of manual and mechanical mixing since it would be performed during the printing process itself.

In another preferred embodiment of the method, the mold in step (iii) is an ABS mold.

In another preferred embodiment of the method for obtaining the self-healable conductive material, the mold has the specific geometry of the component to be manufactured which is selected from slender rectangular structures with thicknesses between 1 mm and 3 mm, slender cylindrical structures with sections of between 1 mm and 3 mm in diameter and flat structures with complex geometries with thicknesses between 1 mm and 3 mm.

Another aspect of the present invention relates to the use of the self-healable material as a sensor-actuator in microfluidic membranes, such that the flow of fluid is controlled by defining a critical pressure, pressure above which the membrane would rupture locally allowing the flow and, moreover, if the pressure again drops below said limit, the membrane would self-heal, preventing the flow again.

Another aspect of the present invention relates to the use of the self-healable conductive material as an end-of-travel sensor for structural components or joints of the human body. For example, it is used as part of robotic arms or protheses. These devices would allow the development of critical strain-based binary sensors that would give rise to local rupture of the material, and therefore to an abrupt change of the electrical resistance or conductivity of the material.

Another aspect of the present invention relates to a device which can be adhered to different joints of structural components or the human body itself which comprises the self-healable conductive material described above, located between two low-current electrodes, wherein the device is arranged on the joint such that rotations of said joint result in the extension of the material. The extensions of the self-healable conductive material, and particularly its rupture, give rise to sudden changes in the electrical resistance thereof. Said device allows providing a temporary electrical resistance profile which represents the evolution of mechanical stresses in that region.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

### BRIEF DESCRIPTION OF THE FIGURES

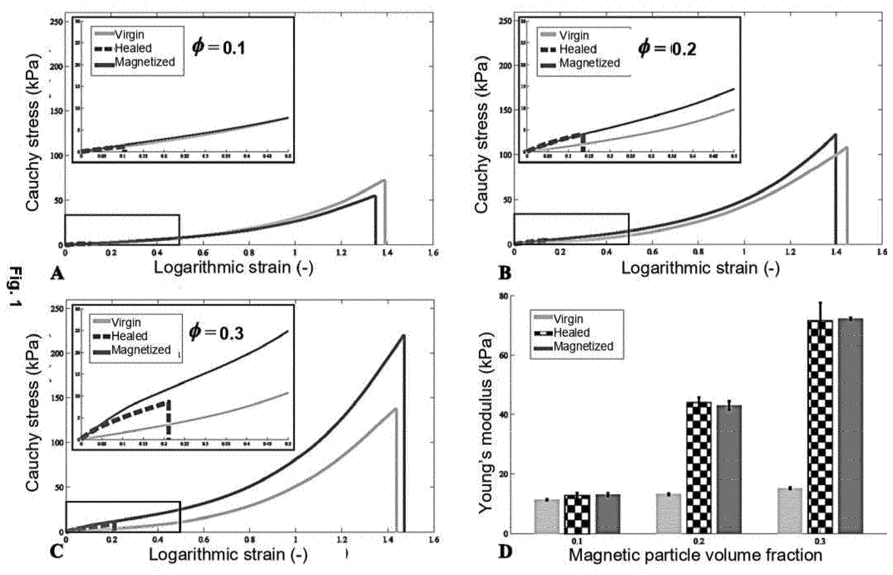

**Fig. 1****.** Experimental results on virgin, magnetized, and healed specimens under quasi-static tensile test. A), B), and C) represent Cauchy stress versus logarithmic strain for MREs with a particle volume of 10%, 20%, and 30%, respectively. The shaded region indicates the dispersion of the test results. D) Mean Young's modulus of virgin, magnetized, and healed specimens at different volume ratios.

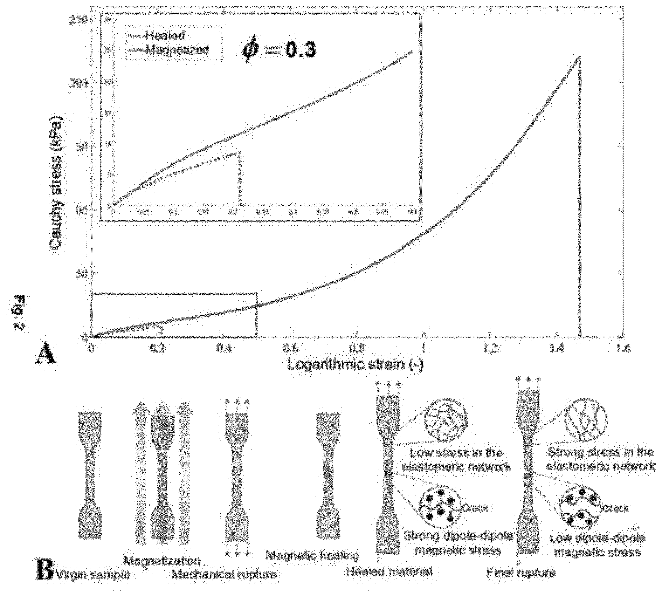

**Fig. 2****.** A) Comparison of the stress-strain curve for magnetized and healed specimens after rupture. B) Diagram of autonomous self-healing.

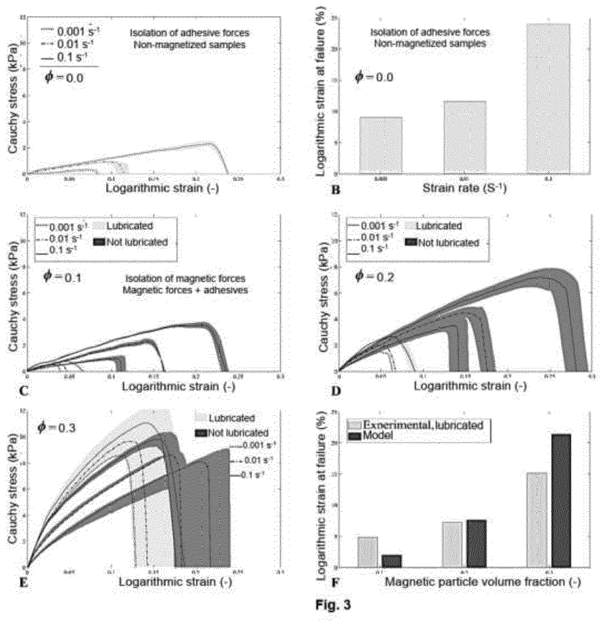

**Fig. 3****.** A) Experimental Cauchy stress versus logarithmic strain of elastomeric samples, i.e., without embedded magnetic particles, subjected to uniaxial tensile loading at different strain rates: 0.001, 0.01, and 0.1 s-1. B) Experimental results of elastomeric samples represented as mean strain at failure versus strain rate. C), D), and E) depict Cauchy stress versus logarithmic strain for self-healed MRE samples with a particle volume fraction of 10%, 20%, and 30%, respectively. F) Comparison between experimental results and theoretical simulations in terms of strain at failure depending on the magnetic particle volume fraction.

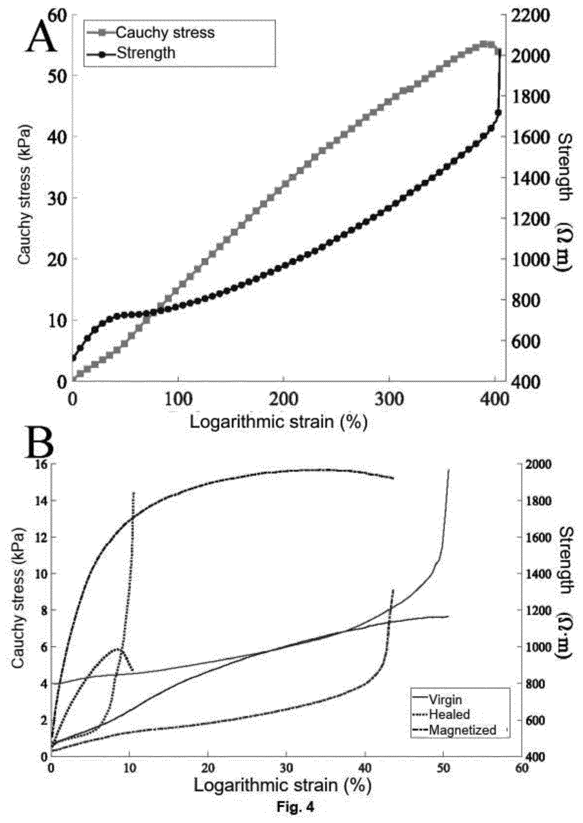

**Fig. 4****.** A) Experimental results of stress-strain and electrical resistance-strain for a soft conductive sample. B) Comparison of the experimental results of stress-strain and electrical resistance-strain in virgin, magnetized, and self-healed samples (magnetized and self-healed after rupture).

### EXAMPLES

Next, the invention will be illustrated by means of assays carried out by the inventors that demonstrate the effectiveness of the product of the invention.

### Example 1

The self-healable material comprises a Dowsil CY52-276 elastomeric adhesive matrix (DowSil, Midland, MI, United States) and NdFeB powder provided by Magnequench (MQP-S-11-9 grade powder, Neo Materials Technology Inc., Greenwood Village, Colorado, United States).

The elastomeric phase is made up of two phases mixed at the ratio recommended by the manufacturer, in other words, 1:1 vol. The magnetic particles have a mean diameter of 35-55 µm. When mixing the matrix and filler phases, the elastomeric material is preheated to 80°C for 2 minutes to prevent sedimentation. This preheating helps to increase the initial viscosity of the elastomeric component during the addition of the magnetic particles and ensures a homogeneous distribution thereof.

The material is magnetized from virgin samples located longitudinally inside a coil system coupled to an impulse magnetizer (DXMM-12C40, Dexing Magnet Tech. Co., Limited, China).

### Example 2

Uniaxial tensile tests are performed on virgin, self-healed, and magnetized samples. A universal testing machine (INSTRON 34TM-5, INSTRON, Norwood, Massachusetts, USA) was used. To obtain reliable results in the extremely soft samples used, a 50 N load cell was used. The gripping force was applied by means of a pressure controller throughout the entire test to ensure the absence of slipping conditions and stress concentration at these regions. The geometric design of the samples followed the UNE-EN ISO 527-2 standard. Three loading rates which gave rise to strain rates of 0.001, 0.01, and 0.1 s⁻¹ were tested.

Two types of samples are prepared, i.e., virgin samples (non-magnetized material) and magnetized samples (self-healable material subjected to the magnetization process). First, the virgin sample and the magnetized sample with different volumes are tested under uniaxial tensile loading in quasi-static conditions. The results are depicted in terms of Cauchy stress and logarithmic strain in Figure 1. The permanent magnetization of the magnetized samples induces internal stresses that cause material stiffening. This indicates that the magnetic force is what contributes to self-healing. This hardening increases as the particle volume present in the matrix increases, showing an increase in Young's modulus up to 4.5 times higher for 30% volume fractions (see Figure 1). Furthermore, no significant differences are observed with respect to stress at failure. In these tests the question is whether particle interactions between two parts, once they have broken, are capable of closing the main crack and provide certain structural integrity during a second loading. To answer this question, healed parts are defined as those parts which come together after they have broken, giving rise to a healing process. When both broken parts come together, they act as magnets attracting each other and generating a force which allows healing the rupture. Furthermore, another tensile test is performed on these samples which have already broken and reattached until achieving a new rupture. Figure 1 shows these results with the corresponding data for virgin and magnetized samples.

The experimental results show that the tested healed specimens tend to withstand higher stresses than virgin specimens and present stress values very close to those withstood by the magnetized samples, depending on their particle content. This strain limit is 10.5%, 13.5%, and 21.1% for a particle volume ratio of 10%, 20%, and 30%, respectively. The stiffness of the healed specimens is almost equivalent to magnetized samples and significantly greater than virgin samples (Figure 1D), suggesting that the structural integrity at failure is partially provided by the magnetic component of the stress. However, the sticky nature of the elastomeric matrix also has certain influence on said integrity. It should also be noted that the mechanical response of the healed specimens has not been altered after being subjected to 10 cycles. This behavior is illustrated in Figure 2, wherein the stress-strain response (Figure 2A) is accompanied by a diagram of the experiment at the times of healing and breakage (Figure 2B). First, the material can deform until it ruptures. Then, the healing process can be observed when the two parts of the tested specimen come together. This process does not need any external energy and occurs in an instantaneous and autonomous manner. As said two broken parts move closer to one another, the magnetized particles interact by means of dipole-dipole interactions closing the crack and therefore "curing" the material. Furthermore, if another loading is applied, the material is capable of transmitting internal forces within the whole structure until reaching a strain of about 20% in true strain. Next, if new mechanical loading is applied, the material experiences homogeneous mechanical strain until reaching a threshold in which mechanical stress becomes predominant over magnetic stress, leading to a new rupture.

### Example 3

Tests are performed with elastomeric samples without magnetic particles to obtain a clear picture of the effect of adhesive forces on strain at failure, Figures 3A-B. Strain at failure depends greatly on the strain rate applied, with the former increasing with the latter. Stresses transmitted within the MRE under these conditions are very low compared with the stress magnitudes shown by magnetized self-healed samples. Therefore, these effects are closely associated with composite elastomeric matrices in which the filler material (typically inorganic material) is embedded. In this sense, when adding the particles, the higher the volume fraction, the greater the effective surface occupied by the elastomeric adhesive matrix will be and, as a consequence, the strain at failure will be lower. Moreover, the tests performed on self-healed samples under the effect of lubrication (suppressed adhesiveness) provide a clear picture of the effects of magnetic forces on strain at failure, Figure 3C-E. In this sense, a strong direct dependence of the particle volume fraction on this variable is observed. This is due to the increase in dipole-dipole interactions which gives rise to a stronger force between the two parts making up the self-healed sample. Moreover, no relevant differences in the strain at failure are observed when varying the strain rate conditions (note that the offset at the highest rate can be attributed to the sensibility of the test device). Furthermore, a slight increase in stress values is obtained when increasing the strain rate. This indicates the capacity of the self-healable material to transmit stresses/strains within the entire sample incorporating the mechanical strength of the elastomeric adhesive matrix, presenting moderate hardening with the strain rate.

These tests were performed on magnetized self-healed samples at different strain rates, Figure 3C-E. These results demonstrate that there is a mechanistic competition between magnetic and adhesive forces that determines the limit strain values leading to rupture. In this sense, magnetic contribution establishes a strain rate-independent threshold defined by the particle content and particle residual magnetization. Moreover, the elastomeric nature of the matrix defines the adhesive contribution that is highly sensitive to strain rate. Therefore, a rate-dependent threshold value is determined. In this sense, for a given sample and test condition, strain at failure is determined by the maximum magnetic and adhesive threshold values. This explanation is consistent with all the results presented herein. Lastly, the understanding of these mechanisms allows explaining the differences between experiments and the theoretical predictions, thereby reconciling experimental and numerical results. Figure 3F shows the comparison, expressed as mean strain at failure, between the experiments performed on self-healed samples under the action of lubrication and theoretical predictions, showing a high concordance in both qualitative and quantitative terms. This demonstrates the validity of the theoretical framework which determines strain at failure as the point at which magnetic stresses are in balance with mechanical stresses in the elastomeric adhesive matrix, in order to design the magnetic strain threshold of the self-healed samples.

### Example 4

The self-healable conductive material is a compound comprising an elastomeric adhesive matrix, such as in Example 1, hard magnetic particles such as in Example 1, and conductive particles. The elastomeric adhesive matrix and hard magnetic particles are the same presented above. For conductive particles, carbon nanoparticles (Vulcan XC72r, 50 nm in size, ρ ≈ 1.8 g/cm³) provided by Cabot Corp are added.

Sample preparation is started by mixing both components of the elastomeric adhesive matrix which are mixed in a ratio of 1:1 (following manufacturer's recommendations).

Once the elastomer is mixed, carbon black (NH) particles are added until reaching 10% by volume, which is the condition in which the first submaterial reaches its optimum conductivity values while providing good polymerization. The submaterial is first mixed manually and then passed through a syringe with a conical tip (Nordson, 22G) in order to achieve complete homogenization and decrease aggregates. Next, hard magnetic particles are then added until reaching a volume fraction of 30% with respect to the final product. The final material is mixed until achieving a homogeneous particle distribution. Next, it is forced to flow again through the syringe with the nozzle to remove the possible concentration of particles that may appear. Lastly, the material is poured into an ABS mold in which it is degassed for 20 minutes in order to eliminate the presence of air bubbles therein. Lastly, it is introduced in an oven at 90°C for 2 h. After this curing process, the sample is removed from the mold and magnetized following the methodology described in the preceding sections.

### Example 5

Mechanical characterization tests are performed on the self-healable conductive material defined in Example 4. The samples are subjected to uniaxial tensile tests following the method used in Example 3. In these tests and to measure the evolution of the electrical properties during strain and rupture, the clamps are electrically isolated so as not to interfere with the ohmmeter (RM-335 804, RS-PRO). Experimental tests are performed on three types of samples: virgin, magnetized, and self-healed (same description as in Example 3 but including conductive particles according to Example 4).

The results are shown in Figure 4. Figure 4A shows the direct evolution of both stress and electrical resistance with respect to strain for a virgin sample. This resistance increases continuously with strain until rupture, at which time it changes abruptly adopting infinite values. Figure 4B shows the behavior of virgin, magnetized, and self-healed samples. The mechanical behavior of these materials is the same as that observed in Example 3 for self-healable materials without conductive particles. Furthermore, a self-healing response is also observed in terms of electrical properties. In general, these results demonstrate that the proposed new material overcomes the two main limitations of the current state of the art:
- Soft conductive materials: Limitation of rapid and abrupt electrical changes at mechanical strain, which are only possible under rupture conditions, limiting the use of the sensor to only one time.
- Soft self-healable materials: Strong limitation related to the need of an external source to activate the self-curing process, preventing the possibility of autonomous self-healing materials. Furthermore, the number of repair cycles is limited.

## Claims

1. A self-healable material, **characterized in that** it comprises
• an elastomeric adhesive matrix with a service temperature stiffness comprised between 0.5 kPa and 12 kPa, considering a service temperature interval of between 5°C and 50°C; and
• a plurality of magnetic particles with at least 150 mT of residual magnetization, wherein said particles are homogeneously distributed throughout the entire volume of the elastomeric adhesive matrix, have a particle size of between 5 µm and 55 µm, and wherein the volume ratio of said particles with respect to the total material is between 8% and 32%.

2. The self-healable material according to claim 1, wherein the elastomeric adhesive matrix is formed by an elastomer material selected from polysiloxane, two-phase polysiloxane, polydimethylsiloxane, polyvinyl siloxane, vinylmethylsiloxane-dimethylsiloxane copolymers, and any combination thereof.

3. The self-healable material according to claim 2, wherein the material of the elastomeric adhesive matrix is a polyvinyl siloxane.

4. The self-healable material according to any of claims 1 to 3, wherein the magnetic particles are selected from NdFeB, SmCo, BaFeO particles and any combination thereof.

5. The self-healable material according to claim 4, wherein the magnetic particles are NdFeB particles.

6. A self-healable conductive material, **characterized in that** it comprises
• the self-healable material according to any of claims 1 to 5; and
• conductive particles, wherein said particles are homogeneously distributed throughout the entire volume of the elastomeric adhesive matrix of the self-healable material, have a particle size of between 10 nm and 50nm, and wherein the volume ratio of said particles with respect to the total conductive composite material is between 8% and 15%.

7. The self-healable conductive material according to claim 6, wherein the conductive particles are selected from carbon nanoparticles of up to 300 nm, silver nanoparticles, copper nanoparticles, gold nanoparticles, and any combination thereof.

8. The self-healable conductive material according to claim 7, wherein the conductive particles are carbon nanoparticles of up to 300 nm.

9. The self-healable conductive material according to any of claims 6 to 8, wherein the volume ratio of the conductive particles with respect to the total conductive material is 10%.

10. A method for obtaining the self-healable material according to claims 1 to 5, **characterized in that** it comprises the following steps:
a) preheating an elastomer material at a temperature of between 70°C and 80°C for at least 2 min and mixing with the magnetic particles in a particle volume ratio with respect to the total material of between 8% and 32%;
b) pouring the mixture obtained in (a) in a mold and performing degasification;
c) curing the degasified mixture obtained in (b) at a temperature of between 90°C and 100°C for a time of between 90 min and 24 hours;
d) permanently magnetizing the material obtained in c) by means of using an impulse magnetizer and removing from the mold.

11. The method for obtaining the self-healable material according to claim 10, wherein before step a), if the elastomer material is a two-phase polysiloxane, mixing of the two components of the elastomer material in a volume ratio of between 5:6 and 6:5 is performed.

12. The method for obtaining the self-healable conductive material according to claims 6 to 9, **characterized in that** it comprises the following steps:
i. Mixing an elastomer material with conductive particles in a particle volume ratio with respect to the total material of between 8% and 15%;
ii. adding magnetic particles to the mixture obtained in (i) in a volume ratio of between 8% and 32% and mixing until homogenization;
iii. removing particle aggregates from the mixture obtained in (ii) and adding into a mold;
iv. degasifying the mixture in the mold obtained in (iii) for at least 20 min;
v. heating the degasified mixture in the mold obtained in (iv) at a temperature of between 90 and 100°C for a time of between 90 min and 24 h; and
vi. permanently magnetizing the material obtained in (v) by means of using an impulse magnetizer and removing from the mold.

13. The method according to claim 12, wherein the mixing of step (i) is first performed manually and then mechanically with a technique selected from mixing and passage into conical tipped syringe; or
the mixing performed in step (i) is carried out by introducing the elastomer material with the conductive particles in a 3D printing device and performing the printing of these materials.

14. Use of the self-healable material according to any of claims 1 to 5 as a sensor-actuator in microfluidic membranes.

15. Use of the self-healable conductive material according to any of claims 6 to 9 as an end-of-travel sensor for structural components or joints of the human body.

16. A device which can be adhered to different joints of structural components or the human body itself which comprises the self-healable conductive material according to claims 6 to 9, located between two low-current electrodes, wherein the self-healable conductive material is arranged on the joint such that rotations of said joint result in the extension of the material and configured so that extensions of the self-healable conductive material and, particularly, its rupture , give rise to sudden changes in the electrical resistance thereof.
